# EUROPEAN PATENT APPLICATION

(11) **EP 1 898 564 A1**
(43) Date of publication of application: **12.03.2008**
(21) Application number: 07115739.0
(22) Date of filing: 05.09.2007
(51) Int. Cl.: H04L 12/28, H04Q 7/38

(54) **Method for managing connections between a wireless terminal and access interfaces**

(30) Priority: 06.09.2006 FR 0653587
(71) Applicant: Alcatel Lucent, 75008 Paris (FR)
(72) Inventor: Helbert, Emmanuel, 67140, ANDLAU (FR)
(74) Representative: Sciaux, Edmond

(57) **Abstract**

The present invention concerns a method for managing connections between a wireless terminal (17, 19) and access interfaces (13, 14, 15, 16) to a radio communication network (20, 21, 22, 30), that radio communication network being connected to a server (10) determining the level of use of the resources of those access interfaces (13, 14, 15, 16).

According to the invention, such a method is characterized in that, the wireless terminal (17, 19) having set up a call via a first access interface (14, 15), it includes the following steps executed in the server (10);
- determining the location of the wireless terminal (17, 19) and the level of use of the resources of the first access interface (14, 15) and at least one second access interface (13, 16),
- selecting that second access interface (13, 16) for transmitting the call of the wireless terminal (17, 19) taking account of its location and of the level of use of the resources of the first access interface (14, 15) and the second access interface (13, 16),
- commanding the change of connection of the wireless terminal (17, 19) from the first access interface (14, 15) to this second access interface (13, 16) without interrupting the call in progress of the wireless terminal.

## Description

The present invention concerns a method for managing connections between a wireless terminal and access interfaces to a telecommunication network as well as a server and a terminal implementing such a method.

A wireless telecommunication network enables one or more wireless terminals to communicate by means of radio signals. For example, cellular mobile telephone networks, such as GSM or 3G networks, and IP (Internet Protocol) networks, such as WIMAX or WiFi networks, which networks are generally referred to as WLAN (Wireless Local Area Networks), are known in the art.

To make a call, a wireless terminal must access a wireless network via an access interface that relays calls between that terminal and fixed line telecommunication means.

During its call, a wireless terminal may be obliged to change access interface, especially if the terminal is moving around and leaves the radio coverage area of a first access interface to enter the radio coverage area of a second access interface.

It is moreover possible for a wireless terminal to be obliged to exit the radio coverage area of an access interface specific to a WLAN network without it being possible to set up a connection with another access interface of the same WLAN network. In this case, any call in progress of the wireless terminal is interrupted.

In this case, as described in US patent application 2005/0153698A1 filed 14 July 2004 by the company Siemens Information and Communication Network Inc., it is possible to use a method employing a second terminal, or more generally a second telecommunication network, to re-establish the interrupted call.

The present invention is the result of an observation specific to the invention based on the fact that, in these methods known in the state of the art, a wireless terminal must transmit requests periodically to determine the surrounding access interfaces as a function of the responses transmitted by those surrounding interfaces to its periodic requests.

Now, according to this observation, it is apparent that the requests periodically transmitted by the wireless terminals, with regard to the access interfaces, cause a significant flow of data in the network that congests and reduces the resources of that network.

In fact the resources of the interfaces available to the terminals are reduced by their activity of analyzing and responding to the periodic requests from the various terminals moving around in their environment.

Finally, the resources of a terminal are depleted, especially in energy terms, by the generation of requests and analyzing the responses from the interfaces.

This is why the present invention concerns a method for managing connections between a wireless terminal and access interfaces to a radio communication network, that radio communication network including a server determining the level of use of the resources of those access interfaces, characterized in that, the wireless terminal having set up a call via a first access interface, it includes the following steps executed in the server:
- determining the location of the wireless terminal and the level of use of the resources of the first access interface and at least one second access interface,
- selecting that second access interface for transmitting the call of the wireless terminal taking account of its location and of the level of use of the resources of the first access interface and the second access interface,
- commanding the change of connection of the wireless terminal from the first access interface to this second access interface without interrupting the call in progress of the wireless terminal.

Such a method has numerous advantages. In fact, it manages the connections of a wireless terminal to access interfaces without using requests transmitted periodically by that terminal with regard to its surrounding interfaces because that management is effected by a server. Thus the performance of the network is enhanced by reducing the quantity of data transmitted by the network for operations of connection between a wireless terminal and an interface.

Similarly, the performance of the interfaces and the wireless terminals is enhanced by reducing their connection activity, especially by limiting the number of requests or responses transmitted for setting up connections.

Moreover, the method can implement functions, described hereinafter, that optimize the use of one or more communication network. For example, the invention enables a terminal operating in a given radio-frequency band with a first interface to switch its call to a second interface, operating in a second radio-frequency band separate from the first, although a terminal operating in accordance with the state of the art can determine only the surrounding interfaces operating in the same frequency band.

Similarly, a dual-band wireless terminal can, by a method according to the invention, switch its call between a WLAN network and a cellular network, for example of GSM type.

In one embodiment, the method includes the step of requesting agreement of the wireless terminal to switching its connection to the second access interface so that the user of the wireless terminal is informed of this change.

In one embodiment, the method comprising the step of determining the level of use of an interface by means of at least one of the following parameters: characteristics of the stream transmitted by each interface - period, bit rate, bandwidth - a capacity, radio performance, these parameters enabling the use of different use criteria such as a rate of use or a cost of use.

In one embodiment, the method includes the step of selecting the second access interface by means of at least one of the following parameters: a connection cost, a transmission cost, a quality of service level, these criteria enabling management of the connection set up in order to offer a service adapted to the user of the wireless terminal.

In one embodiment, the method includes the step of reserving resources at the second access interface for the call of the terminal before disconnecting that terminal from the first interface so that the wireless call is not interrupted on switching the connection from the first access interface to the second access interface.

The invention also concerns a server for managing connections between a wireless terminal and access interfaces to a radio communication network, that server comprising means for determining the level of use of the resources of those access interfaces, characterized in that it comprises:
- means for determining the location of the wireless terminal,
- means for selecting a second access interface for transmitting the call of the wireless terminal taking account of its location and of the level of use of the resources of the first and second access interfaces,
- means for commanding the change of connection of the wireless terminal from the first access interface to this second access interface without interrupting the call in progress of the wireless terminal.

Thus a server of this kind centralizes various operations that enable it to manage the connections of the wireless terminal to interfaces so that the requests transmitted by a wireless terminal and the responses from the access interfaces for managing these connections in accordance with the state of the art are no longer necessary.

In one embodiment, the server includes means for requesting agreement of the wireless terminal to switching its connection to the second access interface so that the terminal is informed of this change.

In one embodiment, the server includes means for determining the level of use of an access interface by means of at least one of the following parameters: characteristics of the stream transmitted by each interface - period, bit rate, bandwidth - a capacity, radio performance.

In one embodiment, the server includes means for selecting the second access interface by means of at least one of the following parameters: a connection cost, a transmission cost, a quality of service level.

In one embodiment, the server includes means for reserving resources at the second access interface for the telecommunication of the wireless terminal before disconnecting that terminal from the first interface.

The invention also concerns a wireless telecommunication terminal comprising means for setting up a connection with access interfaces to a radio communication network, characterized in that it comprises means for receiving a request to change access interface during a call and means for responding to that request.

Thus a terminal of this kind can be used in a method according to the invention or with a server according to the invention, reducing the number of requests transmitted by the wireless terminal for managing its calls with the access interfaces and thereby reducing its energy consumption with a view to increasing its autonomy.

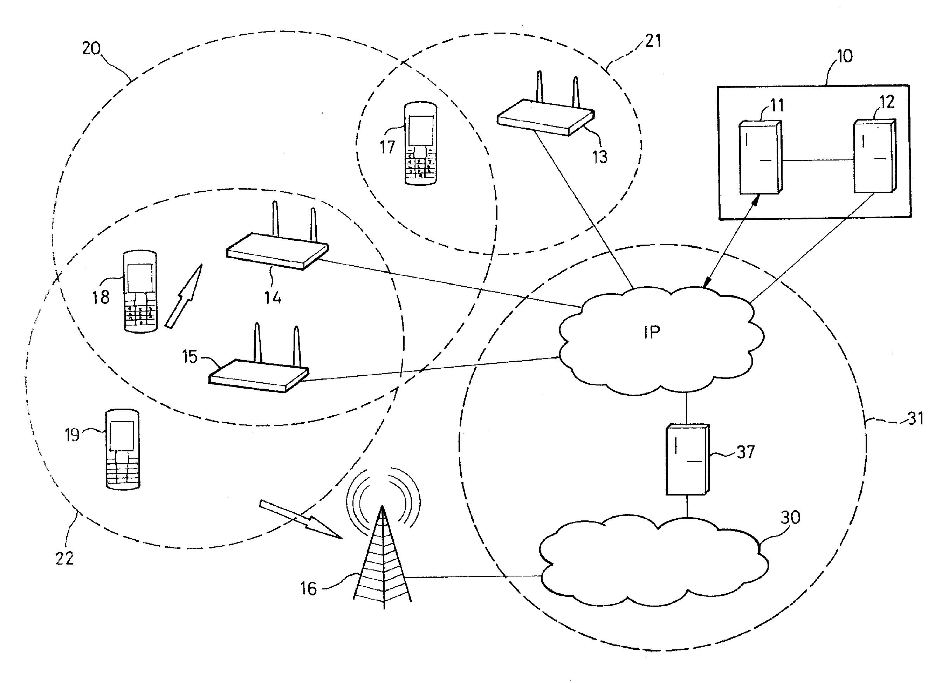

Other features and advantages of the invention will become apparent in the light of the description given hereinafter, by way of nonlimiting illustration, of one embodiment of this invention referring to the appended single figure in which are represented various wireless terminals 17, 18 and 19 and various access interfaces 13, 14 and 15 of WLAN networks or an access interface 16 of a cellular network 30, the connections between these terminals and these interfaces being managed in accordance with the invention as described hereinafter.

A server 10 is dedicated to managing these connections between these access interfaces 13, 14, 15 and 16 and the terminals 17, 18 or 19. To this end, this server 10 comprises first means 12 for locating the terminals and second means 11 for analyzing the quality of service offered by the various interfaces.

Furthermore, this server 10 is connected to the interfaces 13, 14 and 15 via an IP network, that IP network itself being connected to the cellular network 30 via a gateway 37 implementing, for example, a UMA (Unlicensed Mobile Access) architecture or an IMS (IP Multimedia Subsystem) architecture.

Thus the sever 10 is connected to a "converged network" 31 through which it accesses the WLAN networks and the cellular mobile telephone network.

Through such access, the server 10 can receive information at the MAC and physical level from the various elements of these networks and parameters such as stream characteristics - bit rate, period, bandwidth - processing capacities and performance such as packet loss.

It also takes account, at the access interfaces, of parameters such as the identity of the operator associated with an access interface and, at the terminals, the bandwidth, the bit rate, the traffic, a communication protocol, for example SIP or H323, or the dual-band nature of a terminal, i.e. the possibility of communicating via two separate networks such as a cellular network and an IP network.

In a first embodiment of the invention, the server 10 manages the change of connection of the terminal 17 from the interface 14 to the interface 13, the interface 14 generating a coverage area, or WLAN network 20, of 802.11b/g type with a first radio communication frequency band of 2.4 GHz and the interface 13 generating a coverage area, or WLAN network 21, of 802.11 a type using a second radio communication frequency band of 5 GHz.

Such a change is effected by an exchange of requests between the server 10, the interface 13, the interface 14 and the terminal 17 during which the server 10 determines the possibility of the terminal 17 switching to the interface 13 and obtains the allocation of resources of the interface 13 for the terminal 17 before it invites the latter to switch to its new interface.

This change of interface can be motivated for reasons of quality of service or of service cost, especially if the terminal 17 requires a greater bandwidth than the interface 14 can allocate it.

In this embodiment and the subsequent embodiments, a device can be provided in the terminal 17 for accepting the change of interface, which change can be accepted automatically or manually as a function of the variants of the invention.

It should be noted that the location means 12 determine the position of the terminal 17, for example by triangulation using the interfaces, and the server 10 can then determine on the basis of that position the interfaces able to transmit the calls of the terminal 17.

In a second embodiment, the server 10 enables the terminal 18 to transmit its call from the interface 15 to the interface 14 in order to exit the WLAN network 22 of a first operator to join the WLAN network 20 of a second operator; such a change can be motivated by the requirement for a minimum quality of service or for a maximum cost threshold.

In a third embodiment, the server 10 switches the connection of the terminal 19 from the interface 15 of the WLAN network 22 to the interface 16 of a cellular network. In this case, this switching can be to anticipate the terminal 19 exiting the network 22, for example.

Thus the method of the invention enables a call that would otherwise have been interrupted to be continued.

For this purpose, the server 10 must periodically determine the position of the terminal 19 in order to find out its direction. Similarly, the server 10 has to know the dual-band nature of the terminal 19, for example by means of a signal from the terminal or previous registration with the server 10.

Finally, it should be noted that, in this embodiment, the GSM interface 16 is connected to the server 10 via a gateway 37 connecting the cellular telephone network 30 to the IP telephone network.

In a fourth embodiment, the server 10 analyzes and compares the quality of service offered by various interfaces accessible to a terminal in order for the terminal to switch to a new interface to obtain a particular or maximum level of service.

In a final embodiment, a terminal can request the server 10 to obtain a service continuously in the various fixed line networks, such as the possibility of making an emergency call.

In this case, the server 10 allocates resources to the terminal at the interfaces prior to any connection in order to enable the use of the reserved resources at the time of a possible subsequent connection.

To this end, the server 10 can determine the resources necessary for this kind of emergency call from information supplied by the terminal concerned.

In a variant, the server 10 does not allocate resources before setting up an emergency call but afterwards. In this case, the server 10 recognizes an emergency call and, if resources for that emergency call are not available at an interface, it imposes a reduction of the resources used by other terminals in order to release the resources necessary for the emergency call.

To this end, as in the embodiments described hereinabove, the server 10 can take account of information such as characteristics of the stream transmitted by each interface - period, bit rate, bandwidth - radio performance and capacity, identifiers and, generally, information provided by the terminal or processed by the network, that information being in particular transmitted at the MAC layer level.

The present invention lends itself to numerous variants, in particular by combining different embodiments described hereinabove.

## Claims

1. Method for managing connections between a wireless terminal (17, 19) and access interfaces (13, 14, 15, 16) to a radio communication network (20, 21, 22, 30), that radio communication network being connected to a server (10) determining the level of use of the resources of those access interfaces (13, 14, 15, 16), **characterized in that**, the wireless terminal (17, 19) having set up a call via a first access interface (14, 15), it includes the following steps executed in the server (10);
- determining the location of the wireless terminal (17, 19) and the level of use of the resources of the first access interface (14, 15) and at least one second access interface (13, 16),
- selecting that second access interface (13, 16) for transmitting the call of the wireless terminal (17, 19) taking account of its location and of the level of use of the resources of the first access interface (14, 15) and the second access interface (13, 16),
- commanding the change of connection of the wireless terminal (17, 19) from the first access interface (14, 15) to this second access interface (13, 16) without interrupting the call in progress of the wireless terminal.

2. Method according to claim 1 including the step of requesting agreement of the wireless terminal (17, 19) to switching its connection to the second access interface (13, 16).

3. Method according to claim 1 or 2 including the step of determining the level of use of an access interface (13, 14, 15, 16) by means of at least one of the following parameters: characteristics of the stream transmitted by each interface - period, bit rate, bandwidth - a capacity, radio performance.

4. Method according to claim 1, 2 or 3 including the step of selecting the second access interface (13, 16) by means of at least one of the following parameters: a connection cost, a transmission cost, a quality of service level.

5. Method according to any one of the preceding claims including the steps of reserving resources at the second access interface (13, 16) for the call of the wireless terminal (17, 19) before disconnecting that terminal from the first interface.

6. Server (10) for managing connections between a wireless terminal (17, 19) and access interfaces (13, 14, 15, 16) to a radio communication network (20, 21, 22, 30), that server (10) comprising means (11) for determining the level of use of the resources of those access interfaces (13, 14, 15, 16), **characterized in that** it comprises:
- means (12) for determining the location of the wireless terminal,
- means for selecting a second access interface (14, 15) for transmitting the call of the wireless terminal taking account of its location and of the level of use of the resources of the first access interface (13, 15) and the second access interface (14, 16),
- means for commanding the change of connection of the wireless terminal from the first access interface (14, 15) to this second access interface (13, 16) without interrupting the call in progress of the wireless terminal.

7. Server (10) according to claim 6 including means for requesting agreement of the wireless terminal (17, 19) to switching its connection to the second access interface (13, 16).

8. Server (10) according to either of claims 6 or 7 including means for determining the level of use of an access interface (13, 14, 15, 16) by means of at least one of the following parameters: characteristics of the stream transmitted by each interface - period, bit rate, bandwidth - a capacity, radio performance.

9. Server (10) according to any one of claims 6, 7 or 8 including means for selecting the second access interface (13, 16) by means of at least one of the following parameters: a connection cost, a transmission cost, a quality of service level.

10. Server (10) according to any one of claims 6 to 9 including means for reserving resources at the second access interface (13, 16) for the call of the wireless terminal (17, 19) before disconnecting that terminal from the first interface.

11. Wireless telecommunication terminal (17, 19) including means for setting up a connection with access interfaces (13, 14, 15, 16) of a radio communication network (20, 21, 22, 30), **characterized in that** it further includes means for receiving a request to change access interface during a call and means for responding to that request.
